# EUROPEAN PATENT APPLICATION

(11) **EP 1 316 975 A2**
(43) Date of publication of application: **04.06.2003**
(21) Application number: 02396176.6
(22) Date of filing: 27.11.2002
(51) Int. Cl.: H01G 4/008

(54) **Method of manufacturing a capacitor, and a capacitor**

(30) Priority: 28.11.2001 FI 20012331
(71) Applicant: Nokian Capacitors Oy, 33330 Tampere (FI)
(72) Inventor: Enqvist, Yrjö, 33400 Tampere (FI)
(74) Representative: Huhtanen, Ossi

(57) **Abstract**

A dispersion is made from a conductive material and a solvent, and used for coating a dielectric film (1, 1a, 1b) at least partly. Coating is preferably carried out by printing technique or by spraying said dispersion with a nozzle onto the dielectric film (1, 1a, 1b). A capacitor is made from said coated dielectric film. A conductive layer (2, 2a, 2b) provided on top of the dielectric film (1, 1a, 1b) is of a conductive plastic, for example.

## Description

The invention relates to a method of manufacturing a capacitor, in which method a dielectric film is at least partly covered with a conductive layer and a capacitor is made from the dielectric film covered with the conductive layer.

The invention further relates to a capacitor, which is made from a dielectric film, whose surface is at least partly covered with a conductive layer.

German Offenlegungsschrift 19 548 501 discloses a capacitor made from a dielectric film of plastic or paper, the surface of which is provided with a conductive layer. The dielectric film having a conductive layer is folded to form a capacitor. The conductive layer is either a metal film or a metal layer evaporated onto the surface of the dielectric film. If the conductive layer is made from a metal film, the conductive layer becomes quite thick. In this case, the dielectric film also has to be quite thick. Evaporating a metal coating onto the surface of a dielectric film, in turn, is quite laborious and expensive, making the price of a dielectric film provided with an evaporated metal layer quite high. When metallization is used, the surface of the plastic film to be coated has to be subjected to corona treatment, which roughens the surface of the plastic in order for the metal to better adhere to the dielectric film. This corona treatment weakens the dielectric strength of the dielectric film. Furthermore, in metallization, the dielectric film is subjected to a very hot thermal effect and, on the other hand, a very cold cooling effect, which also weakens the dielectric strength of the dielectric film. Capacitors made from metallized films are also disclosed in publications WO96/19002, EP 0 570 599, US 4,229,777 and GB 2 298 962.

The object of the present invention is to provide an improved capacitor and a method of manufacturing a capacitor.

The method of the invention is characterized by making a dispersion of a conductive material and a solvent, coating the dielectric film at least partly with said dispersion, and making the capacitor by winding said coated dielectric film into a capacitor.

The capacitor of the invention is characterized in that the conductive layer is formed onto the surface of the dielectric film of a dispersion, which is made of a conductive material and a solvent, and that the capacitor is wound from said coated dielectric film.

The essential idea of the invention is to make a dispersion of a conductive material and a solvent, coating the dielectric film with said dispersion, and making the capacitor from said coated dielectric film. The idea of a preferred embodiment is to make the conductive layer from conductive plastic. The idea of a second preferred embodiment is to use printing technique for coating the dielectric film.

An advantage of the invention is that a dielectric film provided with a conductive layer is made rapidly, simply and at reasonable cost. Consequently, the production costs of the capacitor become reasonably low. The solution enables the achievement of quite large capacitors at reasonable cost. It is reasonably easy to provide the surface of a dielectric film with a conductive layer such that the conductive layer forms different patterns. Accordingly, the surface of the dielectric film may be provided with different matrices to achieve additional inductance, for example. It is thus possible to provide a capacitor having a given capacitance, and, in addition, the desired inductance in the same structure, i.e. it is possible to combine a capacitor and a coil in the same structure. Furthermore, it is easy to vary the thickness of the conductive layer, allowing the conductivity of the conductive layer to be varied, i.e. the thicker the conductive layer, the better the conductivity. It is easy to vary the thickness of the conductive layer both lengthwise and transversely. In addition to inductance, matrices and patterns enable the formation of other passive components, such as resistors in a capacitor. In addition, by forming the matrices, the self-healing properties of a capacitor can be improved, for example. Furthermore, an empty gap can be left between the points coated with a conductive layer and a narrow bridge connecting the conductive layers can be arranged over the gap, the bridge forming a fuse in a manner known per se. Spraying conductive plastic can be carried out with quite a simple device, and a conductive plastic of a uniform quality can be obtained.

The invention will be described in detail in the attached drawing, wherein
Figure 1 schematically shows the coating of a dielectric film,
Figure 2 schematically shows a cross-section of a capacitor seen from the end, and
Figure 3 shows a cross-sectional side view of the capacitor of Figure 2.

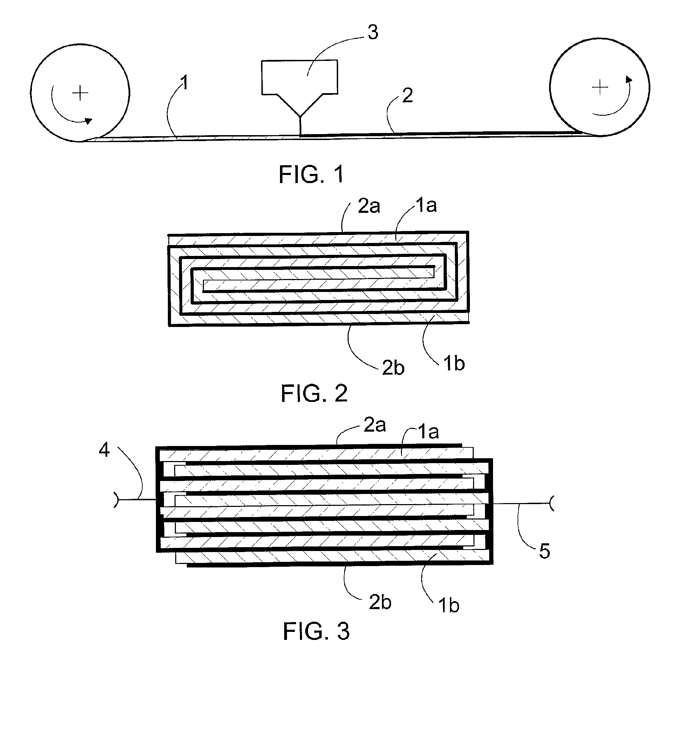

Figure 1 shows a dielectric film 1, which is unrolled from a roll and applied for coating with a conductive layer 2. A dispersion is made from a conductive material and a suitable solvent. Said dispersion is sprayed with a nozzle on top of the dielectric film 1 with a coating device 3. After the dispersion is sprayed, the solvent is evaporated, whereby the conductive layer 2 forms on the surface of the dielectric film 1. Accordingly, the dielectric film is unrolled from the roll and coated with a conductive layer. The dielectric film, coated with a conductive layer, can be rolled into a roll for storage and transportation.

The dielectric film 1 coated in the manner shown in Figure 1 can be used for making the capacitor shown in Figures 2 and 3. The capacitor is made for instance by winding, spirally, a first dielectric film 1a, on top of which is a first conductive layer 2a and a second dielectric film 1b, on top of which is a second conductive layer 2b, and by flattening them. The first conductive layer 2a is connected at its end to a first contact connector 4, and the second conductive layer 2b is similarly connected at the opposite end to a second contact connector 5. When a capacitor is manufactured, the dielectric film, provided with a conductive layer, can be unwound from a storage roll, or the dielectric film 1 can be coated with a conductive layer substantially simultaneously with winding the capacitor, whereby the term substantially simultaneously means that the coated dielectric film is not rolled on a roll for storage, but the coated dielectric film is conveyed to winding to form a capacitor. In this case, for instance two solutions for coating a dielectric film shown in Figure 1 are arranged in association with a winding device of the capacitor, meaning that the conductive layers 2a, 2b are formed on the surfaces of the dielectric films 1a, 1b simultaneously with the manufacture of the capacitor, i.e. when the films are wound. Tens or even hundreds of meters of film can be wound into one capacitor. The width of the film can be for instance 10 to 200 mm. The diameter of the capacitor may be for instance about 30 to 100 mm and its length for instance 10 to 200 mm.

The dielectric film 1 may be for instance of polypropylene or polycarbonate or polyester or polystyrene. Particularly when a capacitor is used in DC use, the dielectric film 1 can be made from polycarbonate or polyester, since in DC use, capacitor losses do not present a problem.

The dispersion sprayed on the surface of the dielectric film 1 may be for instance a conductive paint. The conductive layer 2 may be composed of for instance a mixture in which into a suitable medium metal particles or coal for instance are mixed to provide conductivity. However, most preferably the conductive layer 2 is composed of a material that is conductive itself, such as a conductive plastic, which is relatively simple to process by printing technique or by spraying. Most preferably, the conductive plastic is a polyaniline-based or polythiophene-based conductive polymer, since the electrical properties of such a plastic are of uniform quality. The solvent used in the dispersion is most preferably water, the result being the most environmentally friendly, since the evaporation of the water used as the solvent causes no problems. Furthermore, any suitable solvent, such as toluene, can be used as the solvent. Naturally, the dispersion may also be a hundred-percent dispersion, i.e. a solution, whereby the conductive material is completely dissolved in the solvent. Besides a conductive material and the necessary solvent, the dispersion may naturally contain any suitable additives or fillers.

Printing technique is preferably used for coating the dielectric film 1, enabling rapid, simple and inexpensive formation of the dielectric film provided with a conductive layer. Printing technique may include methods, such as flat printing or gravure printing. Besides printing techniques, other simple manners can be used to provide the surface of the dielectric film 1 with a conductive layer, such as spraying using for instance the ink jet technique. The coating may also be implemented using any suitable coating method known from the paper or plastic technique, such as painting or lamination.

For example, when printing technique is used, it is possible to provide the surface of the dielectric film 1 with a conductive layer 2 such that the conductive layer 2 forms different patterns. It is also easy to form patterns by spraying with a nozzle. This enables the formation of different matrices on the surface of the dielectric film 1 for achieving additional inductance, for example. This enables the manufacture of a capacitor having a given capacitance and, in addition, the desired inductance in the same structure, i.e. a capacitor and a coil can be combined into the same structure. Other passive components, such as resistors, are also easy to form in the capacitor. Furthermore, patterns forming the desired circuits can be formed in the capacitor. It is easy to provide the edge of the area coated with a conductive layer with a thicker part for the contact connection. The contact connection can be made for instance using a conductive glue or the same conductive material that was used for coating the dielectric film. The thickness of the conductive layer can be varied both lengthwise and transversely. The idea of varying the thickness of the conductive layer is that the thicker the conductive layer, the better the conductivity. Furthermore, the thickness of the conductive layer affects the self-healing of the capacitor. If the conductive layer is too thick, the self-healing of the capacitor deteriorates.

The drawings and the related description are only intended to illustrate the inventive idea. The details of the invention may vary within the scope of the claims. The invention is particularly well applicable for use in DC electronics capacitors. The capacitor may also be made in other ways than winding it onto a roll and by flattening it. For example, after winding, the coated dielectric film does not have to be flattened, thus resulting in a cylindrical capacitor. In addition, the coated dielectric film can be cut into sheets and said sheets stacked up. Such a structure is typically used in electronics capacitors, for example. Still further, the capacitor can be achieved by folding the coated dielectric film. It is also possible to coat both sides of the dielectric film 1 with a conductive layer 2, allowing the capacitor to be made for instance by using said dielectric film, coated on both surfaces, and a dielectric film not at all coated with a conductive layer. Furthermore, one or more layers of uncoated dielectric films can be arranged between dielectric films coated with a conductive layer. Still further, it is possible to make for instance what is known as a three-phase capacitor, i.e. a capacitor having three electrodes. The above-described capacitors can be made for voltage areas that vary from less than one volt to for instance one kilovolt. Furthermore, capacitors can be connected in series and in parallel. Parallel connection enables an increase in the power of the capacitor unit, and connection in series, in turn, allows the capacitors to be made into capacitor units or capacitor batteries for a voltage range of up to several kilovolts.

## Claims

1. A method of manufacturing a capacitor, in which method a dielectric film (1, 1a, 1b) is at least partly covered with a conductive layer (2, 2a, 2b) and a capacitor is made from the dielectric film (1, 1a, 1b) covered with the conductive layer (2, 2a, 2b), **characterized by** making a dispersion of a conductive material and a solvent, coating the dielectric film (1, 1a, 1b) at least partly with said dispersion, and making the capacitor by winding said coated dielectric film into a capacitor.

2. A method as claimed in claim 1, **characterized by** coating the dielectric film (1, 1a, 1b) with said dispersion substantially simultaneously with the manufacture of the capacitor.

3. A method as claimed in claim 1 or 2, **characterized by** using water as the solvent in the dispersion.

4. A method as claimed in claim 1 or 2, **characterized by** using toluene as the solvent in the dispersion.

5. A method as claimed in any one of the preceding claims, **characterized by** making the conductive layer (2, 2a, 2b) from a material that is conductive itself.

6. A method as claimed in claim 5, **characterized by** making the conductive layer (2, 2a, 2b) from a conductive plastic.

7. A method as claimed in any one of the preceding claims, **characterized by** implementing the coating by printing technique.

8. A capacitor, which is made from a dielectric film (1, 1a, 1b), whose surface is at least partly covered with a conductive layer (2, 2a, 2b), **characterized in that** the conductive layer (2, 2a, 2b) is formed onto the surface of the dielectric film (1, 1a, 1b) of a dispersion, which is made of a conductive material and a solvent, and that the capacitor is wound from said coated dielectric film (1, 1a, 1b).

9. A capacitor as claimed in claim 8, **characterized in that** the solvent is water.

10. A capacitor as claimed in claim 8, **characterized in that** the solvent is toluene.

11. A capacitor as claimed in any one of claims 8 to 10, **characterized in that** the conductive layer (2, 2a, 2b) is of a material that is conductive itself.

12. A capacitor as claimed in claim 11, **characterized in that** the conductive layer (2, 2a, 2b) is of a conductive plastic.

13. A capacitor as claimed in any one of claims 8 to 12, **characterized in that** the dielectric film (1, 1a, 1b) is of polypropylene, polycarbonate, polyester or polystyrene.

14. A capacitor as claimed in any one of claims 8 to 13, **characterized in that** the conductive layer (2, 2a, 2b) is provided on the surface of the dielectric film (1, 1a, 1b) by printing technique.
